# EUROPEAN PATENT SPECIFICATION

(11) **EP 4 351 884 B1**
(45) Date of publication and mention of the grant of the patent: **28.05.2025**
(21) Application number: 22732618.8
(22) Date of filing: 08.06.2022
(51) Int. Cl.: B41N 6/00, C09J 7/38, C09J 7/25, B41F 27/12, B41N 6/02

(54) **A DOUBLE-SIDED ADHESIVE FLEXOGRAPHIC PRINTING PLATE UNDERLAY**
DOPPELSEITIGE HAFTUNTERLAGE FÜR FLEXODRUCKPLATTEN
SOUS-COUCHE DE PLAQUE D'IMPRESSION FLEXOGRAPHIQUE ADHÉSIVE DOUBLE FACE

(30) Priority: 08.06.2021 GB 202108174
(43) Date of publication of application: 17.04.2024
(73) Proprietor: Proshim Supplies UK Ltd, St. Helens, Merseyside WA9 5JE (GB)
(72) Inventor: BARKER, Matthew, St. Helens Merseyside WA9 5JE (GB)
(74) Representative: Forresters IP LLP
(86) International application number: PCT/GB2022/051433
(87) International publication number: WO 2022/258964

(56) References cited:
- WO-A1-2018/116845
- FR-A1- 2 876 110
- GB-A- 2 412 335
- US-A1- 2009 199 952
- US-A1- 2017 260 425

## Description

### Field of the Invention

The present invention relates to the general field of printing plate manufacture and more specifically to double-sided adhesive underlays used in the manufacture and mounting of flexographic printing plates.

### Background of the Invention

Within the printing industry there are a number of accepted mechanisms for producing printing templates for use in medium and large scale printing runs. One such mechanism is the production of flexographic printing plates.

The process of manufacturing flexographic printing plates involves providing a layer of a particular photopolymer resin on a polyester base film or backing. The photopolymer resin can either be provided as a liquid photopolymer or a solid photopolymer.

In the case of liquid photopolymer flexographic printing plates the photopolymer is poured onto a base film before the imaging process and remains liquid until it is subjected to an ultraviolet (UV) light source. In contrast, when solid photopolymers are used, the solid photopolymer is provided already backed by a base film.

In order to fix the image on the flexographic printing plate the liquid or solid photopolymer is covered with a negative image template before exposing the photopolymer to an ultraviolet (UV) light source. The nature of the photopolymer resin is such that those areas that are not covered by the negative template are cured and as a result harden, whereas the protected areas remain soft. By this process the pattern of the negative image template is transferred to the photopolymer.

The next stage of the process is to remove the excess, non-hardened photopolymer resin and clean up the printing plate. This is initially done by the use of scrapers to manually remove the excess photopolymer. Following the manual treatment the plate is subjecting to a machine wash, which removes the remainder of the excess photopolymer.

In the case of liquid photopolymers this 'washout' is typically carried out using water based detergents, whereas solid photopolymers typically require more stringent solvents to remove the uncured photopolymer.

Once the excess photopolymer has been removed, the plate is subjected to a final curing stage. After the final curing stage is complete the flexographic printing plate is ready to be mounted on to a printing press carrier. The carrier may take the form of a drum-like structure, a cylindrical sleeve, or a continuous belt for example.

One common approach to mounting the flexographic printing plate to its carrier is to use double-sided adhesive sticky tape. When using this approach a skilled printing technician would firstly apply a double-sided adhesive sticky tape to the polyester base film than forms the back of the finished printing plate. Once the adhesive sticky tape has been suitably applied to the flexographic printing plate it can be mounted to the printing press carrier.

The plate mounting procedure can be difficult and time consuming due to the tendency for air bubbles to get trapped between the adhesive sticky tape and surface to which it adheres (i.e. the plate or carrier). The presence of trapped air bubbles is extremely undesirable due to the levels of accuracy required to obtain efficient printing results.

Although a skilled printing technician can greatly reduce the number of air bubbles trapped during the above process (e.g. by popping them), the air removal process is time consuming and can still result in the technician having to pop air bubbles to release the trapped air.

US 2017/260425 A1 describes pressure-sensitive adhesive sheets that can be used as fixing sheets for printing plates of flexographic printing. The sheets are provided with a coating layer embedded in the pressure-sensitive adhesive that provides air channels that allow the escape of air trapped when the sheet is applied to a surface.

Another solution to the issue of air bubbles getting trapped between the flexographic printing plate and the print press carrier was provided in the applicant's earlier UK patent GB2412335, which relates to a base film for use in the manufacture of flexographic printing plates.

In the earlier patent, the base film, upon which a layer of liquid photopolymer is cured, is provided with an adhesive stipe-coating on its rear face that comprises adhesive stripes spaced apart by 3mm wide gaps where no adhesive was present. In use, these gaps act as air channels that facilitate the ejection of air from between the flexographic printing plate when it is mounted on a print press carrier.

Although the adhesive base film provides a number of advantages over double-sided adhesive sticky tape, the main one being the elimination of trapped air, the fact that the base film actually forms an integral part of the flexographic printing plate means that a printing technician has much greater control over the level of adhesion between the plate and the carrier when using adhesive tape rather than the base film.

Also, as the photopolymer in pre-cured solid photopolymer plates is already mounted on a base film, in many cases the use of the additional base film is not an option.

The use of solid photopolymer has become more common in recent times because solid photopolymer is better suited to replicating the high definition images that can be achieved by modern computer controlled laser imaging technologies, such as CDI.

However, despite the increased image resolutions obtained on flexographic printing plates manufactured using these modern techniques, distortion of the finished print image (sometimes referred to as 'dispro') is still an issue facing multi-coloured printing.

WO 2018/116845 A1 and US 2009/199952 A1 relate to adhesive tapes with air release channels that as suitable for adhering flexographic printing plates to print cylinders once they have been manufactured.

### Summary of the Invention

With a view to addressing the limitations of prior art, the present invention provides a double-sided adhesive flexographic printing plate underlay in accordance with claim 1.

In this regard, the present invention provides a double-sided adhesive flexographic printing plate underlay for use in the manufacture and mounting of flexographic printing plates, said underlay comprising: a glass clear polyethylene terephthalate (PET) carrier sheet coated on a front side and a back side thereof with a transparent solvent acrylic adhesive, wherein the adhesive is stripe-coated such that each adhesive stripe is separated from its neighbours by a 0.9-1.1mm gap of non-coated sheet; and a glass clear polyethylene terephthalate (PET) release liner adhered to the front side of the carrier sheet by way of the solvent acrylic adhesive stripe-coating, said release liner being siliconized on both sides thereof.

The combination of the transparent solvent acrylic adhesive and the glass clear PET carrier sheet and release liner renders the underlay of the present invention transparent to UV light.

Further, by employing PET and a solvent acrylic adhesive, once applied, the underlay will not only retain its structure but it will also remain adhered to the back of the solid photopolymer plate despite the harsh solvent-based washout procedures employed in the manufacture of flexographic printing plates from solid photopolymers.

As a consequence, the underlay of the present invention can be applied to the back of the base film of a solid photopolymer plate before it is passed through the image setting process, and at very least before it is subjected to the cleaning stage.

The inventor has discovered that applying the double-sided adhesive underlay to a solid photopolymer plate before an image relief is revealed provides a noticeable reduction in image distortion (i.e. 'dispro'). This was found to be due to the fact that when a double-sided adhesive tape is applied to a flexographic printing plate after the image relief has been revealed the plate offers variable resistance to the tape as is being applied depending on the thickness of the photopolymer at that point on the plate.

This inconsistent application caused the tape to be stretched in certain points across the flexographic printing plate, which can have a slight warping effect on the plate overtime. This can lead to distortion of the image being created by the flexographic printing plate.

The inventor found that when the underlay of the present invention is applied to a pre-cleaned solid photopolymer plate the application is much more consistent and warping of the finished flexographic printing plate image is avoided. As a result, when applied to a solid photopolymer plate prior to at least the cleaning step, and preferably the imaging step too, the underlay of the present invention addresses the problem of image distortion.

Additionally, by virtue of the air channels created by the adhesive stripe coating on both sides of the carrier sheet, the double-sided adhesive flexographic printing plate underlay of the present invention combats the issue of air becoming trapped between the flexographic printing plate and the print press carrier.

In this regard, it was discovered that the provision of a 0.9 and 1.1mm gap between each adhesive stripe provided a sufficient egress for trapped air whilst at the same time minimised the ingress of the solvents used to remove uncured photopolymer in the washout stage of the plate manufacture process.

Preferably each adhesive stripe may be between 2.5 and 3.5mm wide. In addition or as an alternative, the adhesive coating on both the front side and the back side of the carrier sheet may have a coat weight of 65-70g/m².

Typically the adhesive coat weight on both sides of the carrier sheet will be the same, however it is envisaged that in some embodiments the adhesive coat weight on the front side of the carrier sheet may be higher than that of the adhesive coating on the back side of the carrier sheet.

These preferred application patterns of the solvent acrylic adhesive have been found to strike the best balance with the adhesive-free gaps provided between the adhesive stripes coated onto each side of the PET carrier sheet.

Preferably the inter-stripe gaps on the front side of the carrier sheet may be offset from the inter-stripe gaps on the back side of the carrier sheet. It has been found that by arranging the adhesive stripe coating in this way it is possible to achieve an underlay with a smoother profile, which helps minimise the impact of the adhesive underlay on the image printed by the mounted flexographic printing plate in use.

In this regard it is considered particularly preferable for there to be no overlap between the inter-stripe gaps on the front side of the carrier sheet and the inter-stripe gaps on the back side of the carrier sheet.

The carrier sheet employed in the underlay of the present invention is between 0.036 and 0.250mm thick and preferably the carrier sheet is 0.125mm thick.

The release liner employed in the underlay of the present invention is between 0.020 and 0.070mm thick and preferably the release liner is 0.036mm thick.

It has been found that employing glass clear PET sheets of these thicknesses allows the carrier sheet and the release liner to carry out their functions whilst not becoming so thick that they begin to interfere with the passage of UV light through the underlay when it is in situ on the photopolymer plate.

Preferably the underlay may be stored in a rolled up form. It is considered particularly convenient to store the underlay as a roll. This is made possible by the fact that both sides of the PET release liner are siliconized to ensure that the adhesive stripes are less attracted to the PET release liner than they are to the PET carrier sheet.

When provided in a rolled up form it is considered preferable that the level of siliconization applied to a first side of the release liner is different to the level of siliconization applied to a second side of the release liner, such that when the underlay is either rolled or unrolled the release liner adheres more strongly to the adhesive stripe-coating on the front side of the carrier sheet than it does to the adhesive stripe-coating on the back side of the carrier sheet.

Also, it is envisaged that providing different adhesive coat weights on the front and back sides of the carrier can further help to differentiate the extent to which the release liner adheres to the opposite sides of the carrier sheet.

By differentiating the stickability of the two sides of the release liner in this way it is possible to ensure that when a roll of underlay is unfurled the release liner remains in place over the adhesive coating of the front side of the carrier sheet. This ensures that once the back side of the underlay has been applied to the flexographic printing plate the adhesive coating of the front side continues to be protected by the release liner.

The present invention also provides a flexographic printing plate with the double-sided adhesive underlay of the present invention applied to a rear face thereof.

The present invention also provides a method of producing and mounting a flexographic printing plate comprising the steps of: a) applying a double-sided adhesive underlay according to the present invention to the base film of a pre-cleaned solid photopolymer flexographic plate; b) employing a UV developing bed and a suitable image template to selectively cure and harden regions of the solid photopolymer on the flexographic plate; c) cleaning the cured flexographic plate, which comprises the selectively cured solid polymer and the underlay, to remove the uncured solid photopolymer using a suitable solvent; d) subjecting the cleaned flexographic printing plate to at least one further finishing process; e) removing the release liner from the underlay and mounting the finished flexographic plate onto a printing press carrier.

By applying the underlay to the solid photopolymer flexographic plate before it has been cleaned used using solvent to remove excess solid photopolymer it is possible to achieve a much better application of the underlay. As noted above, ensuring a consistent application of the underlay helps to reduce the occurrence of image distortion in multi-coloured print images.

Preferably the double-sided adhesive underlay may be applied to the solid photopolymer flexographic plate prior to the curing stage. Alternatively the double-sided adhesive underlay may be applied to the solid photopolymer flexographic plate after the curing stage but prior to the cleaning stage.

It will be appreciated that, regardless of whether the solid photopolymer has been cured, provided the underlay is applied before the cleaning stage, the printing face of the flexographic printing plate will be uniformly level and, as such, will provide uniform resistance when the underlay is applied to the back of the plate.

It is appreciated that the underlay of the present invention can either be provided as a single piece that has the same area as the flexographic printing plate to which it is applied or alternatively it can be provided in a slimmer tape configuration that is applied to the flexographic plate as a plurality of strips.

Examples of suitable further finishing processes include a further UV exposure and a drying stage.

### Brief Description of the Drawings

The present invention will now be described with reference to the preferred embodiment shown in the drawings, wherein:
Figure 1 shows a roll of the double-sided adhesive underlay in accordance with a preferred embodiment of the present invention;
Figure 2 shows a diagrammatic cross-section side view of the preferred embodiment of the underlay taken from viewpoint A of Figure 1; and
Figure 3 shows a diagrammatic cross-section end view of the preferred embodiment of the underlay taken from viewpoint B of Figure 1.

### Detailed Description of the Preferred Embodiment of the Present Invention

Although the double-sided adhesive flexographic printing plate underlay of the present invention is considered particularly suitable for use in the mounting of solid photopolymer type flexographic printing plates, it is envisioned that the underlay could also be employed to mount liquid photopolymer type flexographic printing plates.

With that said, as the processes involved in the manufacture of both solid photopolymer and liquid photopolymer type flexographic are generally well understood by the skilled person, a detailed description of each stage of the flexographic printing plate manufacture is not considered necessary here.

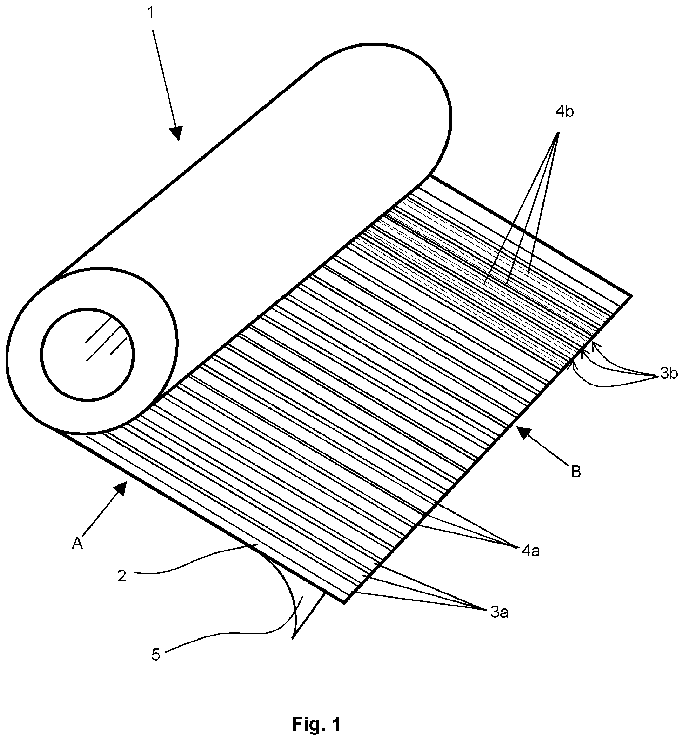

Referring now to Figure 1, a roll of double-sided adhesive flexographic printing plate underlay 1 is shown.

Although it is envisioned that the underlay 1 could also be provided in a thinner tape configuration, similar to the traditional double-sided adhesive tapes currently used to mount print plates, providing the underlay in a wider roll is considered advantageous because the adhesive can be applied to the base film of the flexographic printing plate in a single application.

Traditionally, tapes were used because this made it easier to minimise the amount of air trapped between the flexographic printing plate and the printing press carrier on which the plate was mounted. However, as will be appreciated, the provision of the air channels between the adhesive stripes of the underlay helps to minimise the levels of trapped air, which negates the need to apply the adhesive in the form of strips of adhesive tape.

The ability to apply an adhesive layer to the flexographic printing plate in a single application speeds up this previously time consuming stage of the manufacture process.

The double-sided adhesive flexographic printing plate underlay 1 comprises a glass clear polyethylene terephthalate (PET) carrier sheet 2. Although PET is generally considered a more expensive material than other similar polymer materials, such as polypropylene, glass clear PET was found to be the superior choice for the underlay of the present invention for reasons that are explained below.

The PET carrier sheet 2 has a thickness of between 36-250µm, with 125µm being considered most preferable thickness. This thickness is considered most appropriate because it strikes the best balance between providing sufficient structural strength to the carrier sheet 2 and minimising the interference caused by the carrier sheet to the UV light that is used to cure the photopolymer.

By forming the carrier sheet of the underlay from glass clear PET the impact of the carrier sheet on the UV curing process is minimised.

Further, the use of PET was found to be optimal when compared to other polymer materials typically used in existing adhesive tapes, such as polypropylene, because it is more resilient to the higher drying temperatures (typically over 60°C) used in the post-washout drying stage of solid photopolymer flexographic printing plate manufacture.

In situations where a polypropylene carrier sheet was used it was found that the carrier sheet shrank slightly when subjected to the higher temperatures of the solvent drying stage. This shrinking of the carrier sheet also affected the shape of the flexographic printing plate, which tended to lead to distortion of the final image delivered by the printing plate.

Similarly, PVC carrier sheets were found to be unsuitable because they tended to degrade when subjected the harsh solvents used in the solid photopolymer washout stage.

The PET carrier sheet 2 is provided with an adhesive stripe-coating on both of its sides. The back side of the carrier sheet 2 is provided with a plurality of stripes of solvent acrylic adhesive 3a. In between each adhesive stripe 3a and its nearest neighbour is provided a parallel interposing region of non-coated carrier sheet, hereinafter referred to as a gap or air channel 4a.

The gap between adjacent adhesive stripes 3a is between 0.9 and 1.1mm wide and most preferably is 1mm wide. This width was found to be optimum because it minimised the ingress of solvent during the washout stage whilst at the same time still providing sufficient capacity for trapped air to escape.

The stripes shown in the Figures are not to scale, however, preferably the width of each adhesive stripe coated onto the back side of the carrier sheet is between 2.5 and 3.5mm, with 3mm representing the optimum stripe width.

The front side of the carrier sheet 2 is also provided with a plurality of stripes of solvent acrylic adhesive 3b. As with the back side of the carrier sheet, the adhesive stripes 3b are arranged with an adhesive free region or gap 4b interposed between the adhesive stripes 3b.

The dimensions of the adhesive stripes 3b and the air gaps 4b present on the front side of the carrier sheet 2 are preferably the same as the dimensions of the adhesive stripes 3a and the air gaps 4a present on the back side of the carrier sheet 2.

For the sake of clarity, Figure 1 only shows a selected portion of the adhesive stripe coating pattern 3b, 4b for the front of the carrier sheet 2. However it will be appreciated that the adhesive stripe coating pattern 3b, 4b covers the whole of the front side of the carrier sheet 2 in the same way that the adhesive stripe coating pattern 3a, 4a on the back side of the carrier sheet does.

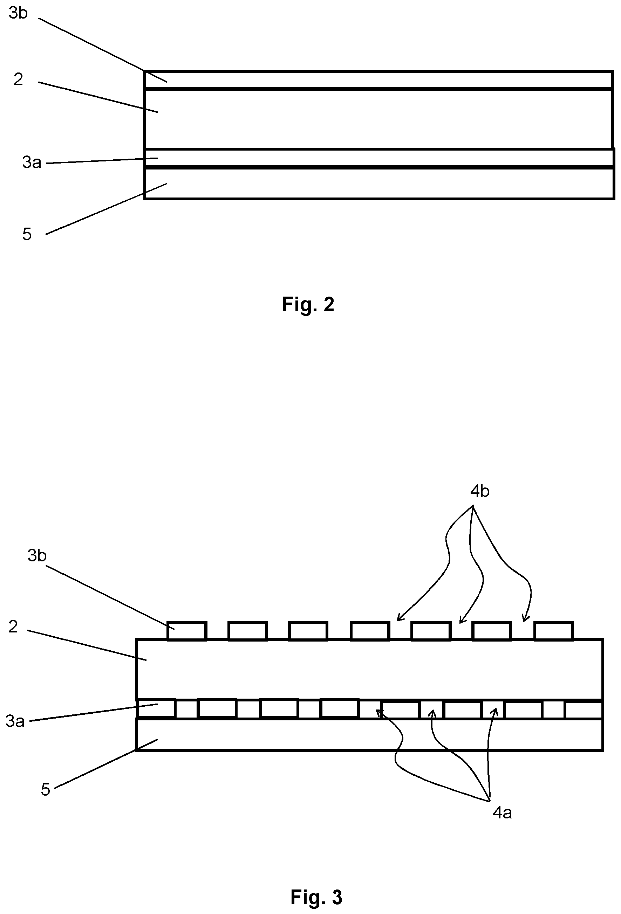

With that said, the arrangement of the adhesive stripe coatings 3a, 3b of the carrier sheet 2 will be better appreciated from the cross-sectional views taken from viewpoints A and B identified in Figure 1. In this regard, Figure 2 shows viewpoint A and Figure 3 shows viewpoint B.

With reference to Figure 3, in particular, it will be appreciated that in the preferred embodiment shown the adhesive stripe coating pattern 3a, 4a provided on the back side of the carrier sheet 2 is offset from the adhesive stripe coating pattern 3b, 4b provided on the front side of the carrier sheet 2, such that there is absolutely no overlap between the gaps 4a, 4b.

This offset arrangement is considered beneficial because it avoids the creation of potentially weaker, more flexible regions on the underlay 1 that could result in the flexographic printing plate being unevenly supported when it is mounted on a printing press carrier, which in turn could cause distortion of the final print image (i.e. 'dispro').

It was found that employing a glass clear PET carrier sheet 2 made the process of positioning the adhesive stripe coating patterns in the desired offset arrangement much easier to achieve.

The adhesive selected to coat the PET carrier sheet 2 is an solvent acrylic adhesive because it was found that water based adhesives were unable to survive being subjected to the cleaning solvent during the washout stage of the flexographic printing plate manufacture.

In addition, only those solvent acrylic adhesives that are transparent to UV light are considered suitable for the underlay of the present invention, because it is considered crucial that none of the components of the underlay (i.e. carrier sheet, release liner or adhesive coating) interfere with the transmission of UV light to the photopolymer during the image setting stage of the plate manufacture process.

In order to protect the adhesive stripe-coating 3b provided on the front side of the carrier sheet 2, a release liner 5 is provided. As the same considerations that were taken into account for the carrier sheet 2 also apply to the release liner 5, said liner is also made from a glass clear PET.

With that said, as the release liner 5 does not need to carry the adhesive coating 3a, 3b it does not necessarily need to be as thick as the PET carrier sheet 2. In view of this, it was found that the release liner is preferably between 20 and 70 µm thick. A thickness in the region of 36µm is most preferable because this is thick enough to allow the release liner to be removed by hand whilst not so thick as to unnecessarily increase the overall thickness of the underlay and, in so doing, negatively impact on the levels of UV light passing through the underlay to the photopolymer during the curing process.

In order to ensure that the adhesive coating 3b is retained on the carrier sheet 2 and is not transferred to the liner sheet 5, the liner sheet is formed from a siliconized glass clear PET. Advantageously the two sides of the liner sheet are provide with different levels of siliconization so as to ensure that one side of the liner sheet (i.e. that facing the front side coating 3a) adheres more strongly to the adhesive of the underlay.

This differential between the stickability of the release liner's two sides ensures that when the underlay is stored as a roll the release liner is retained in position covering the front adhesive coating 3b and is not peeled away by the back adhesive coating 3a. This enables the underlay to protect the adhesive coating until it is time to mount the finished flexographic printing plate on the printing press carrier.

It is envisaged that alternatively or additionally, the preferential peeling effect of the release liner could be facilitated or enhanced by adopting slightly different adhesive coat weights on the front and back sides of the carrier sheet.

By combining the above described features in the double-sided adhesive flexographic printing plate underlay of the present invention it has been possible to produce an improved method of manufacturing and mounting flexographic printing plates and in particular solid photopolymer type plates.

It has been found that because the underlay of the present invention is more resilient to the harsh solvent treatments used in the solid photopolymer washout stage, it can be applied earlier on in the plate manufacture process, that is, before the image has even been transferred onto the solid photopolymer.

Further, because the components of the underlay are transparent to ultra violet light, applying it to the back of flexographic printing plate prior to the UV curing stage does not necessitate any changes to the existing image curing processes used in flexographic printing plate manufacture.

Not only does the underlay of the present invention, with its air releasing channels, allow printing technicians to more quickly complete the mounting of flexographic printing plates, the application of the underlay at the pre-curing stage also addresses the real problem of image distortion experienced in many high definition multi-colour image print runs.

## Claims

1. A double-sided adhesive flexographic printing plate underlay (1) for use in the manufacture and mounting of flexographic printing plates, said underlay comprising:
a glass clear polyethylene terephthalate (PET) carrier sheet (2) that is between 0.036 and 0.250mm thick and transparent to UV radiation, said sheet coated on a front side and a back side thereof with a solvent acrylic adhesive that is transparent to UV radiation, wherein the adhesive is stripe-coated such that each adhesive stripe (3a, 3b) is separated from its neighbours by a 0.9-1.1mm gap (4a, 4b) of non-coated sheet; and
a glass clear polyethylene terephthalate (PET) release liner (5) that is between 0.020 and 0.070mm thick and transparent to UV radiation, wherein the release liner is adhered to the front side of the carrier sheet by way of the solvent acrylic adhesive stripe-coating, said release liner being siliconized on both sides thereof.

2. The underlay (1) of claim 1, wherein each adhesive stripe (3a, 3b) is between 2.5 and 3.5mm wide.

3. The underlay (1) of claim 1 or 2, wherein the adhesive coating on the front side and the back side of the carrier sheet (2) has a coat weight of 65-70g/m².

4. The underlay (1) of claim 1, 2 or 3, wherein the inter-stripe gaps (4b) on the front side of the carrier sheet (2) are offset from the inter-stripe gaps (4a) on the back side of the carrier sheet (2).

5. The underlay (1) of claim 4, wherein there is no overlap between the inter-stripe gaps (4b) on the front side of the carrier sheet (2) and the inter-stripe gaps (4a) on the back side of the carrier sheet (2).

6. The underlay (1) of any one of the preceding claims, wherein the carrier sheet (2) is 0.125mm thick.

7. The underlay (1) of any one of the preceding claims, wherein the release liner (5) is 0.036mm thick.

8. The underlay (1) of any one of the preceding claims, wherein the underlay is stored in a rolled up form.

9. The underlay (1) of claim 8, wherein the level of siliconization applied to a first side of the release liner (5) is different to the level of siliconization applied to a second side of the release liner, such that when the underlay is either rolled or unrolled the release liner adheres more strongly to the adhesive stripe-coating on the front side of the carrier sheet (2) than it does to the adhesive stripe-coating on the back side of the carrier sheet.

10. A flexographic printing plate with an underlay according to any one of the preceding claims adhered to a rear face thereof.

11. A method of producing and mounting a flexographic printing plate comprising:
a) applying a double-sided adhesive underlay (1) according to any one of claims 1 to 9 to the base film of a pre-cured solid photopolymer flexographic plate;
b) employing a UV developing bed and a suitable image template to selectively cure and harden regions of the solid photopolymer on the flexographic plate;
c) cleaning the cured flexographic plate, which comprises the selectively cured solid polymer and the underlay, to remove the uncured solid photopolymer using a suitable solvent;
d) subjecting the cleaned flexographic printing plate to at least one further finishing process;
e) removing the release liner from the underlay (1) and mounting the finished flexographic plate onto a printing press carrier.

12. The method of claim 11, wherein the double-sided adhesive underlay (1) is applied to the solid photopolymer flexographic plate prior to the curing stage.

13. The method of claim 11, wherein the double-sided adhesive underlay (1) is applied to the solid photopolymer flexographic plate after the curing stage but prior to the cleaning stage.

14. The method of any one of claims 11-13, wherein the underlay (1) is provided as a single piece across the entire flexographic plate.

15. The method of any one of claims 11-13, wherein the underlay (1) is provided as a plurality of pieces applied to the flexographic plate.

## Patentansprüche

1. Doppelseitige Flexodruckplatten-Haftunterlage (1) zur Verwendung bei der Herstellung und Montage von Flexodruckplatten, wobei die Unterlage umfasst:
eine glasklare Polyethylenterephthalat(PET)-Trägerfolie (2), die zwischen 0,036 und 0,250 mm dick und für UV-Strahlung transparent ist, wobei die Folie auf einer Vorderseite und einer Rückseite davon mit einem Solvent-Acrylhaftmittel beschichtet ist, das für UV-Strahlung transparent ist, wobei das Haftmittel streifenbeschichtet ist, so dass jeder Haftstreifen (3a, 3b) durch einen 0,9-1,1 mm großen Spalt (4a, 4b) aus nicht-beschichteter Folie von seinen Nachbarn getrennt ist; und
einen glasklaren Polyethylenterephthalat(PET)-Release-Liner (5), der zwischen 0,020 und 0,070 mm dick und für UV-Strahlung transparent ist, wobei der Release-Liner an der Vorderseite der Trägerfolie mittels der Solvent-Acrylhaftmittel-Streifenbeschichtung haftet, wobei der Release-Liner auf beiden Seiten davon silikonisiert ist.

2. Unterlage (1) nach Anspruch 1, wobei jeder Haftstreifen (3a, 3b) zwischen 2,5 und 3,5 mm breit ist.

3. Unterlage (1) nach Anspruch 1 oder 2, wobei die Haftbeschichtung auf der Vorderseite und der Rückseite der Trägerfolie (2) ein Beschichtungsgewicht von 65-70 g/m² aufweist.

4. Unterlage (1) nach Anspruch 1, 2 oder 3, wobei die Streifenzwischenlücken (4b) auf der Vorderseite der Trägerfolie (2) von den Streifenzwischenlücken (4a) auf der Rückseite der Trägerfolie (2) versetzt sind.

5. Unterlage (1) nach Anspruch 4, wobei es keine Überlappung zwischen den Streifenzwischenlücken (4b) auf der Vorderseite der Trägerfolie (2) und den Streifenzwischenlücken (4a) auf der Rückseite der Trägerfolie (2) gibt.

6. Unterlage (1) nach einem der vorhergehenden Ansprüche, wobei die Trägerfolie (2) 0,125 mm dick ist.

7. Unterlage (1) nach einem der vorhergehenden Ansprüche, wobei der Release-Liner (5) 0,036 mm dick ist.

8. Unterlage (1) nach einem der vorhergehenden Ansprüche, wobei die Unterlage in aufgerollter Form gelagert wird.

9. Unterlage (1) nach Anspruch 8, wobei der auf einer ersten Seite des Release-Liners (5) aufgebrachte Silikonisierungsgrad sich von dem auf einer zweiten Seite des Release-Liners aufgebrachten Silikonisierungsgrad unterscheidet, so dass, wenn die Unterlage entweder aufgerollt oder abgerollt ist, der Release-Liner stärker an der Haftstreifenbeschichtung auf der Vorderseite der Trägerfolie (2) haftet als an der Haftstreifenbeschichtung auf der Rückseite der Trägerfolie.

10. Flexodruckplatte mit einer Unterlage nach einem der vorhergehenden Ansprüche, die an einer hinteren Fläche davon haftet.

11. Verfahren zur Herstellung und Montage einer Flexodruckplatte, umfassend:
a) Aufbringen einer doppelseitigen Haftunterlage (1) nach einem der Ansprüche 1 bis 9 auf der Basisfolie einer vorvulkanisierten festen Photopolymer-Flexoplatte;
b) Verwenden eines UV-Entwicklungsbetts und einer geeigneten Bildvorlage, um Bereiche des festen Photopolymers auf der Flexoplatte selektiv zu vulkanisieren und zu härten;
c) Reinigen der vulkanisierten Flexodruckplatte, die das selektiv vulkanisierte feste Polymer und die Unterlage umfasst, um das unvulkanisierte feste Photopolymer unter Verwendung eines geeigneten Solvents zu entfernen;
d) Aussetzen der gereinigten Flexodruckplatte an mindestens einen weiteren Finishing-Vorgang;
e) Entfernen des Release-Liners von der Unterlage (1) und Montieren der fertigen Flexodruckplatte auf einen Druckerpressenträger.

12. Verfahren nach Anspruch 11, wobei die doppelseitige Haftunterlage (1) vor der Vulkanisierungsphase auf der festen Photopolymer-Flexoplatte aufgebracht wird.

13. Verfahren nach Anspruch 11, wobei die doppelseitige Haftunterlage (1) auf der festen Photopolymer-Flexoplatte nach der Vulkanisierungsphase, aber vor der Reinigungsphase aufgebracht wird.

14. Verfahren nach einem der Ansprüche 11-13, wobei die Unterlage (1) als ein einzelnes Stück über die gesamte Flexoplatte vorgesehen ist.

15. Verfahren nach einem der Ansprüche 11-13, wobei die Unterlage (1) als eine Vielzahl von auf der Flexoplatte aufgebrachten Stücken vorgesehen ist.

## Revendications

1. Sous-couche de plaque d'impression flexographique adhésive double face (1) destinée à une utilisation dans la fabrication et le montage de plaques d'impression flexographique, ladite sous-couche comprenant :
une feuille de support en téréphtalate de polyéthylène (PET) ayant la transparence du verre (2) qui a une épaisseur comprise entre 0,036 et 0,250 mm et qui est transparente au rayonnement UV, une face frontale et une face postérieure de ladite feuille étant revêtues d'un adhésif acrylique à solvant qui est transparent au rayonnement UV, l'adhésif étant appliqué en bandes de telle sorte que chaque bande d'adhésif (3a, 3b) soit séparée de ses voisines par un espace de 0,9 à 1,1 mm (4a, 4b) de feuille non revêtue ; et
une doublure antiadhésive en téréphtalate de polyéthylène (PET) ayant la transparence du verre (5) qui a une épaisseur comprise entre 0,020 et 0,070 mm et qui est transparente au rayonnement UV, la doublure antiadhésive étant collée sur la face frontale de la feuille de support au moyen du revêtement sous forme de bandes d'adhésif acrylique à solvant, ladite doublure antiadhésive étant siliconée sur ses deux faces.

2. Sous-couche (1) selon la revendication 1, dans laquelle chaque bande d'adhésif (3a, 3b) a une largeur comprise entre 2,5 et 3,5 mm.

3. Sous-couche (1) selon la revendication 1 ou 2, dans laquelle le revêtement d'adhésif sur la face frontale et la face postérieure de la feuille de support (2) a un poids de couche de 65 à 70 g/m².

4. Sous-couche (1) selon la revendication 1, 2 ou 3, dans laquelle les espaces situés entre les bandes (4b) sur la face frontale de la feuille de support (2) sont décalés par rapport aux espaces situés entre les bandes (4a) sur la face postérieure de la feuille de support (2).

5. Sous-couche (1) selon la revendication 4, dans laquelle il n'y a pas de chevauchement entre les espaces situés entre les bandes (4b) sur la face frontale de la feuille de support (2) et les espaces situés entre les bandes (4a) sur la face postérieure de la feuille de support (2).

6. Sous-couche (1) selon l'une quelconque des revendications précédentes, dans laquelle la feuille de support (2) a une épaisseur de 0,125 mm.

7. Sous-couche (1) selon l'une quelconque des revendications précédentes, dans laquelle la doublure antiadhésive (5) a une épaisseur de 0,036 mm.

8. Sous-couche (1) selon l'une quelconque des revendications précédentes, la sous-couche étant stockée sous forme enroulée.

9. Sous-couche (1) selon la revendication 8, dans laquelle le niveau de siliconage appliqué à une première face de la doublure antiadhésive (5) est différent du niveau de siliconage appliqué à une deuxième face de la doublure antiadhésive, de telle sorte que lorsque la sous-couche est soit enroulée soit déroulée, la doublure antiadhésive adhère plus fortement au revêtement sous forme de bandes d'adhésif sur la face frontale de la feuille de support (2) qu'au revêtement sous forme de bandes d'adhésif sur la face postérieure de la feuille de transport.

10. Plaque d'impression flexographique comportant une sous-couche selon l'une quelconque des revendications précédentes collée sur un dos de ladite plaque.

11. Procédé de production et de montage d'une plaque d'impression flexographique comprenant :
a) l'application d'une sous-couche adhésive double face (1) selon l'une quelconque des revendications 1 à 9 sur le film de base d'une plaque flexographique à photopolymère solide précuit ;
b) l'utilisation d'un lit de développement aux UV et d'un modèle d'image approprié pour cuire et durcir sélectivement des régions du photopolymère solide sur la plaque flexographique ;
c) le nettoyage de la plaque flexographique cuite, qui comprend le polymère solide sélectivement cuit et la sous-couche, pour éliminer le photopolymère solide non cuit à l'aide d'un solvant approprié ;
d) le fait de soumettre la plaque d'impression flexographique nettoyée à au moins un processus de finition supplémentaire ;
e) le retrait de la doublure antiadhésive de la sous-couche (1) et le montage de la plaque flexographique finie sur un support de presse d'imprimerie.

12. Procédé selon la revendication 11, dans lequel la sous-couche adhésive double face (1) est appliquée sur la plaque flexographique à photopolymère solide avant l'étape de cuisson.

13. Procédé selon la revendication 11, dans lequel la sous-couche adhésive double face (1) est appliquée sur la plaque flexographique à photopolymère solide après l'étape de cuisson mais avant l'étape de nettoyage.

14. Procédé selon l'une quelconque des revendications 11 à 13, dans lequel la sous-couche (1) est disposée en une seule pièce à travers l'ensemble de la plaque flexographique.

15. Procédé selon l'une quelconque des revendications 11 à 13, dans lequel la sous-couche (1) est disposée sous la forme d'une pluralité de pièces appliquées sur la plaque flexographique.
